# FASCICULE DE BREVET EUROPEEN

(11) **EP 0 494 008 B1**
(45) Date de publication et mention de la délivrance du brevet: **23.08.1995**
(21) Numéro de dépôt: 91403487.1
(22) Date de dépôt: 20.12.1991
(51) Int. Cl.: F04D 9/04, F04D 13/04, F04D 3/00, F02K 9/46

(54) **Turbopompe à gavage intégré en flux axial**
Turbopumpe mit einer durch axialer Durchströmung angetriebenen Überdruckpumpe
Turbopump with axial throughflow booster

(30) Priorité: 31.12.1990 FR 9016548
(43) Date de publication de la demande: 08.07.1992
(73) Titulaire: SOCIETE EUROPEENNE DE PROPULSION, 92150 Suresnes (FR)
(72) Inventeur: Girault, Jean-Philippe, F-27510 Tourny (FR)
(74) Mandataire: Thévenet, Jean-Bruno

(56) Documents cités:
- EP-A- 0 060 993
- EP-A- 0 374 020
- DE-C- 885 050
- DE-C- 1 001 113
- US-A- 3 004 494
- US-A- 3 093 084
- US-A- 3 103 176
- RUSSIAN ENGINEERING JOURNAL, vol. 53, no. 11, 1973, pages 31-35; O.V. BAIBAKOVet al.: "Better power/speed caviation for centrifugal pumps"

## Description

La présente invention concerne une turbopompe à gavage intégré en flux axial, pour la pressurisation d'un fluide.

Les turbopompes sont utilisées dans différents domaines et notamment dans le domaine spatial pour la pressurisation d'ergols.

La recherche d'un accroissement des rendements et simultanément d'une réduction de l'encombrement et de la masse d'une turbopompe conduisent à choisir des vitesses de rotation élevées.

Aux grandes vitesses de rotation, le risque de cavitation est accru. C'est pourquoi on a déjà envisagé d'associer une pompe haute pression à une pompe de gavage basse pression, cette dernière procurant l'augmentation de pression nécessaire à l'entrée du rouet haute pression pour éviter toute cavitation aux grandes vitesses de rotation.

### Art antérieur

Différents modes d'entraînement d'une pompe basse pression de gavage et différentes façons d'associer des circuits basse pression (BP) et haute pression (HP) ont déjà été proposés.

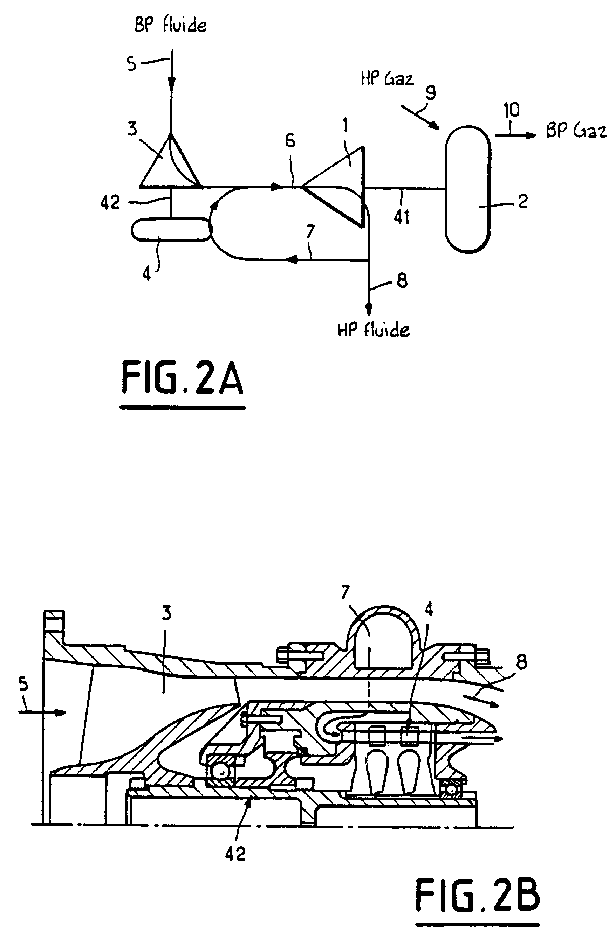

Ainsi, un mode d'entraînement traditionnel d'une pompe basse pression de gavage 3, représenté schématiquement sur la figure 2A, est constitué par un circuit en dérivation. Dans ce cas, une partie 7 du fluide HP véhiculé par la pompe haute pression 1 est recirculée de la sortie de la pompe HP 1 à la turbine hydraulique basse pression 4 qui sert à l'entraînement de la pompe BP de gavage 3. Le fluide BP 5 introduit dans la pompe BP 3 présente à la sortie de celle-ci une pression moyenne (MP) de sorte que le courant de fluide 6 à moyenne pression appliqué à l'entrée de la pompe HP 1 permet d'éviter toute cavitation au niveau de la pompe HP 1 même si celle-ci présente une vitesse de rotation élevée. Le fluide HP 7 recirculé vers la turbine hydraulique 4 entraînant l'arbre 42 de la pompe BP 3 ne constitue qu'une relativement faible fraction du courant de flux de HP utile 8. L'arbre 41 de la pompe HP 1 est lui-même entraîné de façon classique par une turbine à gaz 2 présentant une entrée 9 de gaz HP et une sortie 10 de gaz BP.

La figure 2B montre un exemple particulier de réalisation d'une pompe, telle que celle illustrée schématiquement sur la figure 2A, proposée dans une monographie de la NASA intitulée "Turbopump systems for liquid rocket engines" SP-8107, pp. 53-55. La figure 2B montre ainsi une pompe de gavage BP 3 entraînée par une turbine hydraulique 4 alimentée à partir d'une fraction 7 du fluide HP 8 issu de la pompe HP 1, elle-même entraînée à partir d'une turbine à gaz non représentée sur la figure 2B.

Les systèmes du type de ceux illustrés en référence aux figures 2A et 2B nécessitent des liaisons hydrauliques haute pression - basse pression encombrantes, difficiles à étancher, la recirculation d'un faible débit sous de fortes pertes de charges n'offrant pas le meilleur compromis fonctionnel et ne permettant pas de remédier à tous les problèmes de cavitation au niveau du rouet HP de la pompe HP 1. Par ailleurs, l'adoption d'un montage "en ligne", dans lequel la pompe BP 3 est placée devant la pompe HP 1, conduit à un ensemble hydraulique encombrant.

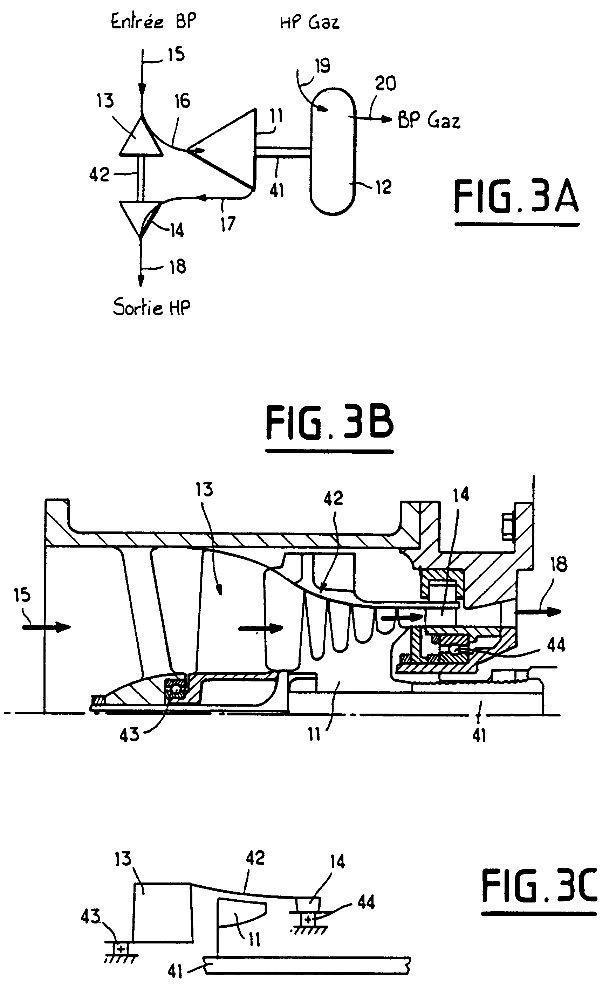

Les figures 3A à 3D montrent des systèmes associant une pompe de gavage BP 13 à une pompe HP 11, selon un circuit en cascade. La figure 3A présente le schéma de principe d'un tel système, dans lequel tout le débit de fluide 17 sortant de la pompe HP 11 actionne, avec une faible détente, la turbine hydraulique BP 14 qui entraîne par l'arbre BP 42 la pompe de gavage 13 recevant le courant de fluide BP d'entrée 15 pour renvoyer à l'entrée du rouet HP de la pompe HP 11 un courant de fluide 16 à moyenne pression. Comme dans le cas du système de la figure 2A, l'arbre 41 de la pompe HP 11 délivre un courant de sortie 18 et est entraîné de façon classique par une turbine à gaz 12 présentant une entrée 19 de gaz HP et une sortie 20 de gaz BP.

Les figures 3B et 3C montrent un exemple d'application du circuit de la figure 3A au cas d'une pompe de gavage 13 de faible puissance. La figure 3B montre l'agencement des différents constituants du système de la figure 3A, à l'exception de la turbine à gaz 12 qui n'est pas représentée et la figure 3C montre, de façon simplifiée, les dispositions relatives, dans l'agencement de la figure 3B, de l'arbre menant principal 41 entraîné par la turbine à gaz 12 et de l'arbre mené hydrauliquement 42 avec ses paliers 43, 44 de support par rapport au bâti. La figure 3C fait apparaître de façon symbolique les éléments tournants solidaires des arbres 41 et 42, c'est-à-dire les éléments tournants de la turbine hydraulique 14 et de la pompe BP 13 qui sont solidaires de l'arbre secondaire BP 42 et les éléments tournants de la pompe HP 11, qui sont solidaires de l'arbre principal HP 41.

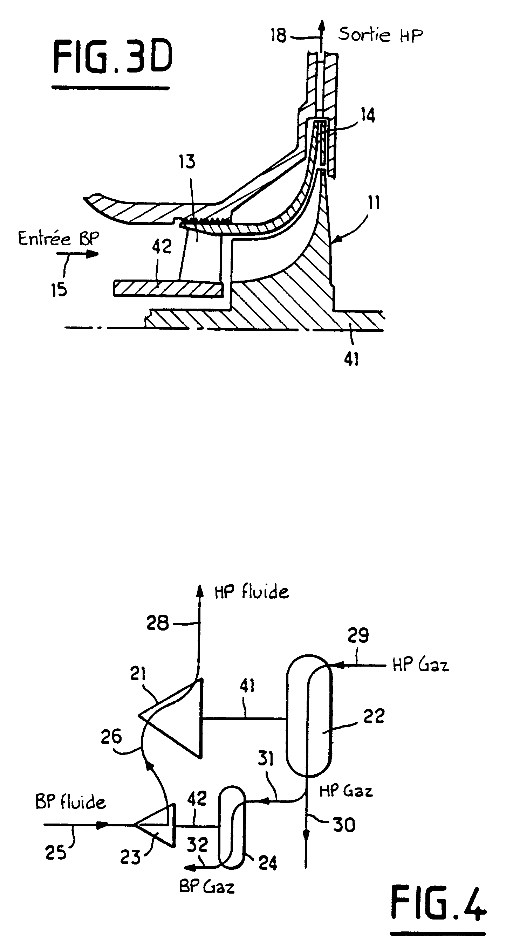

La figure 3D illustre un autre mode particulier de réalisation d'un circuit impliquant un cycle en cascade, tel que celui de la figure 3A, qui a été décrit dans un ouvrage de O.E.BALJE, intitulé "Turbomachines", p. 429, paru aux Editions Wiley en 1981. Dans ce cas, la turbine hydraulique 14 est constituée d'un diffuseur tournant placé en aval du rouet HP de la pompe HP 11 et solidaire d'un inducteur BP 13 qui joue une fonction de même nature que la pompe de gavage 13 de la figure 3A, et se trouve placé en amont du rouet de la pompe HP 11.

Les tentatives d'expérimentation d'un agencement tel que celui de la figure 3D se sont cependant heurtées à de complexes problèmes de paliers et ont été limitées à des essais à faible vitesse et faible puissance.

La figure 4 montre le schéma de principe d'un système de turbopompe avec pompe BP de gavage dans lequel une pompe BP de gavage 23 est solidaire d'un arbre 42 entraîné par une turbine à gaz 24 alimentée à partir d'un courant de gaz principal 31 d'entraînement de la pompe HP 21. Sur la figure 4, la référence 29 désigne le courant de gaz HP appliqué à la turbine à gaz principale 22 tandis que la référence 32 désigne le courant de gaz BP issu de la turbine à gaz auxiliaire 24. Les références 25, 26 et 28 désignent elles-mêmes respectivement le courant de liquide BP en entrée de la pompe de gavage 23, le courant de liquide MP issu de la pompe de gavage 23 et appliqué à la pompe HP 21 et le courant de liquide HP délivré par la pompe HP 21.

Un système tel que celui de la figure 4 est désavantagé par les problèmes de dilatation différentielle entre les pièces froides côté pompe et chaudes côté turbine et par les problèmes d'étanchéités entre circuits de liquide et circuits de gaz, qui sont inhérents à ce cycle. Un cycle tel que celui de la figure 4 est par ailleurs proscrit dans le cas des fluides chimiquement très actifs tels que l'oxygène liquide.

D'une manière générale, les systèmes tels que celui illustré sur la figure 4 présentent des puissances massiques élevées, sont complexes et, associant deux turbomachines, sont tributaires d'un encombrement important. Une telle architecture implique une complexité de montage, un nombre de pièces important et des points de fixation multiples pouvant conduire à de difficiles problèmes de vibrations dans des structures suspendues à la chambre propulsive.

### Objet et description succincte de l'invention

La présente invention vise à remédier aux inconvénients des systèmes de l'art antérieur et à permettre l'utilisation d'une pompe basse pression de gavage en association avec une turbopompe, dans le but de supprimer ou limiter le phénomène de cavitation dans la partie de la pompe haute pression aux grandes vitesses de rotation, en atteignant une compacité importante de l'ensemble tout en conservant un niveau élevé des performances.

Ces buts sont atteints grâce à une turbopompe à gavage intégré en flux axial, selon les caracteristiques de la revendication 1.

La turbopompe comprend en outre un inducteur haute pression monté sur l'arbre principal entre le canal de retour et le rouet haute pression.

De par le principe consistant à partager la puissance entre une pompe basse pression et une pompe haute pression incorporée dans la pompe basse pression, il est possible d'obtenir, pour une turbopompe conforme à l'invention, un rendement élevé, avec une possibilité d'optimisation des pompes aussi grande ou même meilleure qu'avec des pompes séparées, et une obtention d'une vitesse de rotation élevée. Le rendement peut être d'autant plus élevé que le raccourcissement des circuits par rapport aux systèmes de l'art antérieur, tels que ceux des figures 2A, 2B, 3A à 3D et 4, conduit à une diminution des pertes de charges en ligne.

L'architecture particulièrement compacte de la turbopompe selon l'invention, avec intégration dans la turbomachine, d'un surpresseur rotatif constitué par un rouet de gavage entraîné par le fluide pressurisé lui-même et destiné à accroître la pression du fluide à son entrée dans la pompe principale conduit à une diminution importante de la masse totale de la machine et de son encombrement tout en réduisant le nombre de pièces nécessaires sans augmentation des difficultés de production des pièces.

Ces avantages sont particulièrement importants dans le cadre d'une turbopompe de moteur-fusée, dans la mesure où l'architecture de la machine et son montage sur l'ensemble propulsif sont grandement simplifiés par la diminution du nombre de pièces et des raccordements au moteur.

La réduction des temps d'assemblage de la machine et du montage sur l'ensemble propulsif conduisent à une réduction des coûts.

La diminution du nombre d'organes, de la sensibilité aux vibrationsde la complexité du montage accroît la sûreté de fonctionnement.

La conception d'ensemble est simplifiée du fait de l'absence de circuits spéciaux de récupération et de gestion des fuites de liquide ou de gaz, et il est possible d'utiliser un canal de refoulement qui a une forme plus simple que celle d'une volute et peut même être un tore, ce qui réduit le coût.

La pompe basse pression de gavage définit un courant de fluide basse pression essentiellement parallèle à l'axe de la turbopompe tandis que la pompe haute pression est agencée de telle manière que le rouet haute pression refoule le fluide haute pression axialement vers l'intérieur de l'arbre principal puis vers le canal de refoulement dans un plan approximativement perpendiculaire à l'axe de la turbopompe, en croisant, sans échange mécanique, le courant de fluide basse pression à travers lesdits bras radiaux.

L'arbre principal entraîné à grande vitesse par la turbine est monté par rapport au carter d'une part à l'aide de paliers à roulements disposés entre lesdits bras radiaux et l'extrémité avant de l'arbre principal et d'autre part un palier adapté aux grandes vitesses monté dans le fond arrière du canal de retour.

L'arbre secondaire est monté sur l'arbre principal par l'intermédiaire d'un roulement à rouleaux et de roulements à billes.

Cette disposition à quatre paliers permet d'obtenir une vitesse de rotation élevée pour l'arbre principal HP et la rotation libre de l'ensemble basse pression entraîné par la turbine hydraulique.

On notera que les paliers placés entre la pompe BP et la pompe HP tournent à une vitesse relative faible qui correspond à la différence entre les vitesses de rotation de l'arbre principal HP et de l'arbre secondaire BP. De la sorte, les paliers sont peu sollicités et leur durée de vie est augmentée.

Selon un mode particulier de réalisation, ledit palier monté dans le fond arrière du canal de retour est un palier à billes lubrifié et refroidi par un faible débit de fluide haute pression prélevé dans le canal axial par un canal de recirculation de faible longueur ménagé dans l'arbre principal et renvoyé dans le canal de retour par un canal de faible longueur.

Selon un autre mode particulier de réalisation, ledit palier monté dans le fond arrière du canal de retour est un palier fluide ou à foils alimenté par un faible débit de fluide haute pression prélevé dans le canal axial par un canal de recirculation de faible longueur ménagé dans l'arbre principal et renvoyé dans le canal de retour par un canal de faible longueur.

Selon encore un autre mode particulier de réalisation, ledit palier monté dans le fond arrière du canal de retour est un palier magnétique actif refroidi par un faible débit de fluide haute pression prélevé dans le canal axial par un canal de recirculation de faible longueur ménagé dans l'arbre principal et renvoyé dans le canal de retour par un canal de faible longueur.

La turbopompe est caractérisée en ce que les paliers à roulements disposés entre lesdits bras radiaux et l'extrémité avant de l'arbre principal sont lubrifiés et refroidis à l'aide du courant de fluide de travail haute pression issu du canal axial et renvoyé vers le canal de refoulement.

Cette disposition évite toute tuyauterie externe, minimise les pertes en ligne et assure des conditions fonctionnelles en débit, surpression, température, optimales pour le palier supportant l'arbre principal à grande vitesse. Elle assure également une grande simplicité du montage et une diminution du nombre de pièces, ce qui contribue à réduire les coûts et à augmenter la sûreté de fonctionnement.

La turbopompe comprend des moyens d'étanchéité dynamique entre l'arbre secondaire constituant le rotor de la pompe basse pression et les organes solidaires de l'arbre principal constituant le rotor de la pompe haute pression qui comprennent des joints fluides, tels que des labyrinthes à léchettes, anneaux ou bagues flottantes.

Selon un mode préférentiel de réalisation, la turbopompe comprend des premier et second ensembles de joints successifs, d'ouverture antagoniste, disposés respectivement entre l'arbre secondaire et le rotor de la pompe haute pression, et entre l'arbre secondaire et le redresseur basse pression solidaire du carter.

Les joints fluides présentent un jeu en fonctionnement permettant à la fois de minimiser les débits de fuite du fluide HP vers la sortie de la pompe BP et de régler le débit de fuite vers l'entrée de la pompe BP au strict besoin des paliers disposés entre la partie basse pression et la partie haute pression et de participer ainsi à une gestion optimale des fuites. Le débit ainsi prélevé pour la lubrification de ces paliers dans le mode préférentiel de réalisation est obtenu sans montage ou pièce supplémentaire, en cohérence avec le schéma fonctionnel général de la machine.

Selon une autre caractéristique particulière de l'invention, la turbopompe comprend des moyens d'étanchéité dynamique entre d'une part les organes solidaires de l'arbre secondaire faisant partie du rotor de la pompe basse pression et d'autre part les bras radiaux et l'arbre principal qui comprennent des joints fluides tels que des labyrinthes à léchettes qui présentent un jeu en fonctionnement minimisant les débits de fluide entre le courant de fluide haute pression introduit dans le canal axial et évacué par les bras radiaux et le courant de fluide basse pression d'entrée.

Selon encore un autre aspect particulier de l'invention, le canal de retour est délimité par une pièce de fonderie intégrée au carter munie de nervures de renforcement, et un joint annulaire amortisseur est interposé entre ladite pièce de fonderie et l'arbre principal.

Cette caractéristique assure une meilleure tenue de l'ensemble tournant et contribue à accroître la durée de vie.

La turbine à gaz d'entraînement de l'arbre principal comprend un carter rattaché par des pions radiaux au carter de la turbopompe.

Le découplage thermique entre la pompe et la turbine est ainsi bien réalisé, sans se faire au détriment de la raideur structurale.

Les canaux ménagés à travers les bras radiaux peuvent déboucher dans un tore lui-même en communication avec le canal de refoulement.

Selon une variante de réalisation possible, l'arbre principal et un orifice de communication entre le canal axial de l'arbre principal et les bras radiaux sont situés dans le plan tangent à la paroi interne des bras radiaux située du côté du rouet basse pression et du rouet haute pression.

Cette configuration permet de réduire les pertes de charge et de simplifier le montage.

### Brève description des dessins

D'autres caractéristiques et avantages de l'invention ressortiront de la description suivante de modes particuliers de réalisation, donnés à titre d'exemples en référence aux dessins annexés, sur lesquels :
- la figure 1 est une vue en coupe axiale d'une turbopompe à gavage intégré à flux axial, selon un mode particulier de réalisation de l'invention,
- la figure 2A est un schéma de principe montrant l'association connue d'une turbopompe et d'une pompe basse pression de gavage disposée à l'entrée de la turbopompe et entraînée par une turbine hydraulique alimentée par un courant de fluide haute pression dérivé du courant de fluide haute pression de sortie de la turbopompe,
- la figure 2B est une vue en demi-coupe axiale d'un exemple d'architecture connue de turbopompe associée à une pompe basse pression de gavage selon le schéma de principe de la figure 2A,
- la figure 3A est un schéma de principe montrant l'association connue d'une turbopompe et d'une pompe basse pression de gavage disposée à l'entrée de la turbopompe et entraînée par une turbine hydraulique alimentée en cascade par l'ensemble du courant de fluide haute pression de sortie de la turbopompe,
- la figure 3B est une vue en demi-coupe axiale d'un premier exemple d'architecture connue de turbopompe associée à une pompe basse pression de gavage de faible puissance selon le schéma de principe de la figure 3A,
- la figure 3C est une vue schématique simplifiée de certains des éléments mis en oeuvre dans l'architecture de la figure 3B,
- la figure 3D est une vue en demi-coupe axiale d'un deuxième exemple d'architecture connue de turbopompe associée à un inducteur basse pression selon le schéma de principe de la figure 3A, avec mise en oeuvre d'une puissance plus élevée que dans le cas de l'architecture des figures 3B et 3C,
- la figure 4 est un schéma de principe montrant l'association connue d'une turbopompe et d'une pompe basse pression de gavage disposée à l'entrée de la turbopompe et entraînée par une turbine à gaz annexe alimentée par un flux de gaz haute pression dérivé du flux de gaz haute pression de sortie de la turbine à gaz principale d'entraînement de la turbopompe,
- la figure 5 est une vue de face dans le plan d'entrée de la turbopompe de la figure 1, avec arrachement partiel,
- la figure 6 est une vue de détail montrant en demi-coupe axiale un exemple de fond arrière de la pompe principale haute pression de la turbopompe de la figure 1, et
- la figure 7 est une vue en demi-coupe axiale d'une turbopompe à gavage intégré à flux axial, selon une variante de réalisation de l'invention.

### Description détaillée de modes particuliers de réalisation

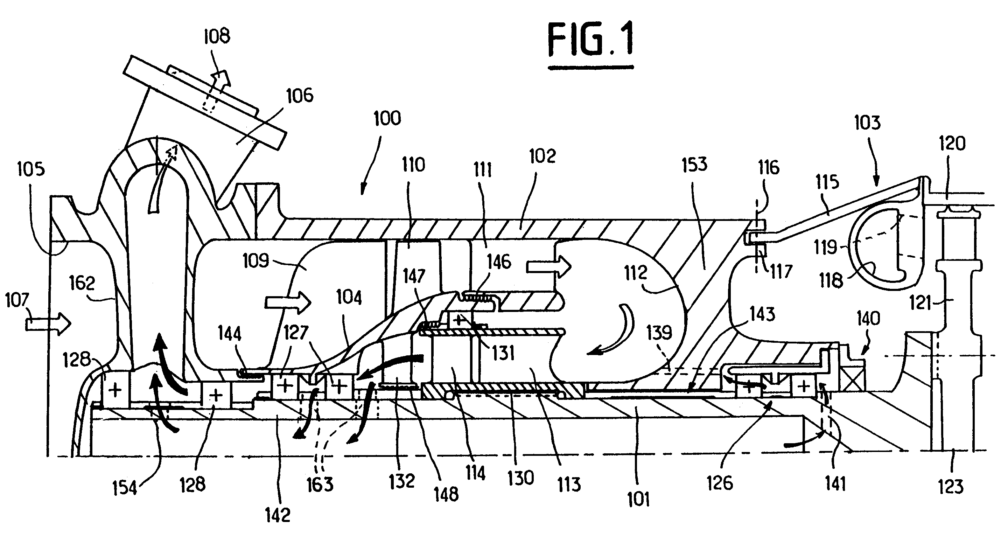

La figure 1 représente la vue d'ensemble d'une turbopompe 100 à gavage intégré à flux axial, conforme à la présente invention, qui est plus particulièrement destinée à assurer la pressurisation des ergols d'un moteur-fusée.

Selon un aspect essentiel de l'invention, on trouve à l'intérieur d'un même carter 102 les éléments actifs d'une pompe HP entraînés par un arbre principal 101 à partir d'une turbine à gaz extérieure 103, et les éléments actifs d'une pompe BP solidaires d'un arbre secondaire 104 coaxial à l'arbre principal 101, l'arbre secondaire 104 étant entraîné lui-même directement par le rouet BP 110 solidaire d'une turbine hydraulique 132 entraînée par le fluide HP de sortie de la pompe HP. Le rouet HP 114 de la pompe HP, monté sur l'arbre principal 101, est intégré à l'intérieur du rouet BP 110 afin de permettre au courant de fluide HP fourni par le rouet HP 114 aux pression et débit spécifiés pour l'ensemble de la machine, de passer par un canal de refoulement 106 en définissant un courant de sortie 108 vers des organes d'utilisation, tout en assurant un entraînement de la turbine hydraulique 132.

Le rouet BP 110 disposé au voisinage de l'entrée 105 du liquide 107 exerce une fonction de gavage du rouet HP 114, monté en cascade par rapport au rouet BP 110, en permettant l'application en entrée du rouet HP 114, d'un courant de fluide à moyenne pression MP qui est à même d'éviter les phénomènes de cavitation dans le rouet HP 114 aux grandes vitesses de rotation.

Le niveau élevé de performances dû à la présence d'un étage surpresseur d'entrée constitué par la pompe BP ne se fait pas au détriment de la compacité, dans la mesure où le corps de pompe BP est intégré au corps de pompe HP, les pompes BP et HP étant toutes deux coaxiales à la machine.

Comme cela a été indiqué plus haut, une turbine hydraulique 132 d'entraînement du rouet BP 110 est combinée à un étage de la pompe BP et se trouve sensiblement dans le même plan radial que le rouet BP 110, à l'intérieur de l'arbre secondaire 104 et immédiatement en sortie du rouet HP 114. L'intégration d'une turbine hydraulique motrice dans le rouet de gavage BP 110 contribue à accroître la compacité de l'ensemble.

La pompe BP comprend un rotor constitué par l'arbre secondaire 104, qui porte en entrée un inducteur BP 105 constituant un premier étage d'aspiration avec un large diamètre d'entrée favorisant une capacité d'aspiration élevée.

Dans le cas du mode de réalisation de la figure 1, la pompe BP ne comprend qu'un inducteur BP 109 et un rouet BP 110 concentrique à la turbine hydraulique 132, mais il est possible de réaliser une pompe BP avec un plus grand nombre d'étages disposés en amont du rouet caréné BP 110 assurant la fonction de turbine hydraulique.

La liaison entre la sortie de la pompe BP et l'entrée de la pompe HP comprend un redresseur 111, monté sur le carter 102 de l'ensemble des pompes BP et HP, qui permet de redresser l'écoulement hydraulique sur l'axe de la machine et d'éviter toute pré-rotation du fluide à l'entrée du rouet HP 114, en association avec un canal de retour 112 qui dévie de 180° le flux de fluide moyenne pression issu du redresseur 111 et ramène celui-ci parallèlement à l'axe de la turbopompe vers le rouet HP 114.

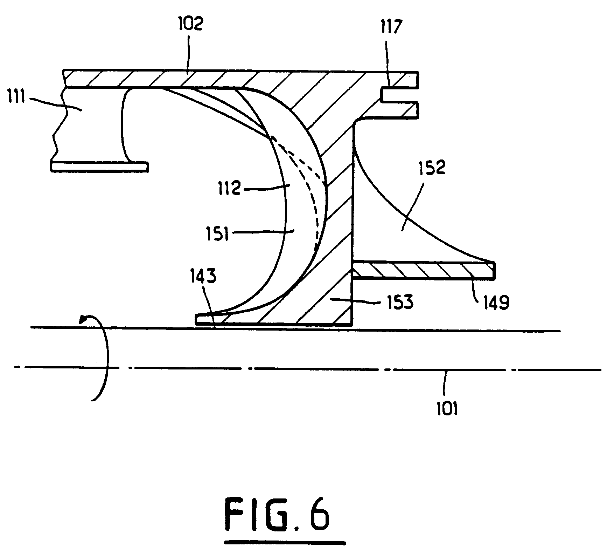

La figure 6 montre de façon plus particulière l'ensemble du fond arrière 153 de la pompe avec le canal de retour 112. Le canal de retour 112 est obtenu par des formes simples, ouvertes, à partir d'une pièce de fonderie 153 munie de nervures ou ailettes 151, 152 et intégrée au carter 102 de la pompe, d'une manière qui augmente la raideur structurale tout en réservant un emplacement 143 pour la mise en place d'un joint annulaire amortisseur 125 entre l'arbre 101 et le canal de retour 112. Cette caractéristique permet une meilleure tenue de l'ensemble tournant et contribue à une durée de vie élevée.

L'ensemble du fond arrière 153 permet de réserver, sur la paroi externe du canal de retour 112, un logement 149 pour un palier 126 et son système d'étanchéité 140 (figure 1), destinés au montage de l'arbre principal 101 dans sa partie arrière solidaire de la turbine à gaz 103.

Le carter 120 de la turbine à gaz 103 peut être fixé à l'aide de pions radiaux 116 par une extrémité 115 engagée directement dans des brides 117 formées dans le fond arrière 153 (figure 1).

Les mesures indiquées ci-dessus permettent de bien réaliser le découplage thermique entre la pompe et la turbine sans se faire au détriment de la raideur structurale.

Le rotor 130 de la pompe HP, entraîné directement par l'arbre central principal 101, est constitué d'un inducteur 113, qui peut être facultatif, et d'un rouet 114 munis de flasques.

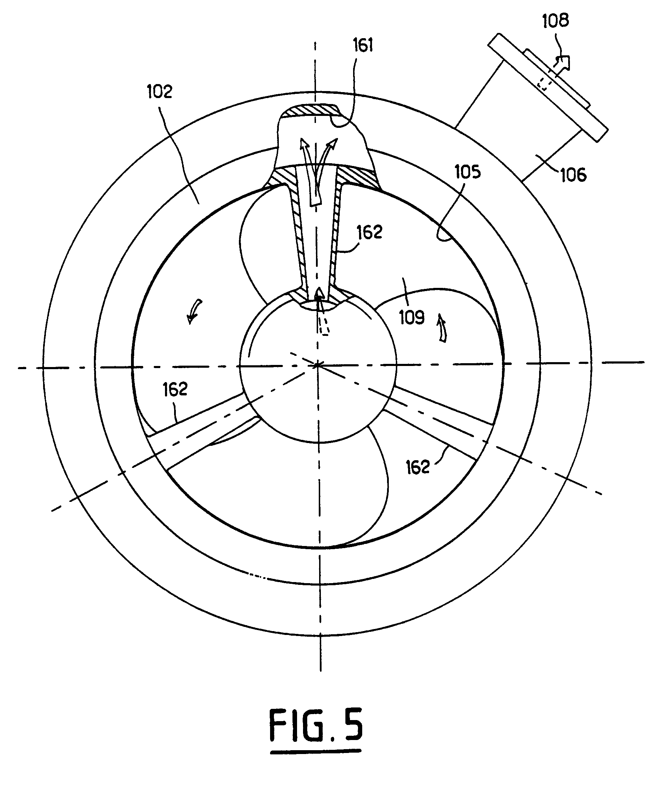

Le courant axial de fluide HP issu du rouet HP 114 traverse les aubes de la turbine hydraulique 132 d'entraînement de l'arbre secondaire 104 avant de pénétrer par des canaux radiaux 163 de courte longueur dans un canal axial 142 ménagé dans l'arbre principal 101. Le courant axial de fluide HP ressort au voisinage de l'extrémité avant de l'arbre 101, par d'autres canaux radiaux 154 de courte longueur, pour pénétrer dans les canaux ménagés dans les bras radiaux 162 qui débouchent eux-mêmes dans un tore 161 en communication avec le canal de refoulement 106 (figures 1 et 5). Le courant de fluide HP assure par ailleurs la lubrification et le refroidissement des divers paliers utilisés.

On décrira maintenant de façon plus détaillée des exemples particuliers de montage de l'arbre principal 101 et de l'arbre secondaire 104 à l'aide de paliers de divers types.

L'arbre principal à grande vitesse 101 est monté, d'une part à l'aide d'un doublet de roulements à billes 128, disposé entre les bras radiaux 162 solidaires du carter 102 et l'extrémité avant de l'arbre principal 101, et d'autre part à l'aide d'un palier 126 adapté aux grandes vitesses tel qu'un doublet de roulements à billes, monté dans le fond arrière 153 du canal de retour 112.

L'arbre secondaire basse pression 104 est lui-même monté sur l'arbre principal 101 par l'intermédiaire d'un roulement à rouleaux 131 disposé entre l'extrémité arrière de l'arbre secondaire 104 et le flasque du rouet HP 114, et d'un doublet de roulements à billes 127 qui est disposé entre l'arbre secondaire 104 et l'arbre principal 101 au voisinage des canaux radiaux 163, afin d'être lubrifiés et refroidis par le courant HP issu de la turbine 132.

Cette disposition à quatre paliers permet d'obtenir une vitesse de rotation élevée pour l'arbre principal 101 et la rotation libre de l'ensemble basse pression entraîné par la turbine hydraulique.

On notera que les paliers placés entre la pompe BP et la pompe HP tournent à une vitesse relative faible qui correspond à la différence entre les vitesses de rotation de l'arbre principal 101 et de l'arbre secondaire 104, de sorte que l'usure de ces paliers est relativement lente.

La figure 1 montre un exemple de réalisation du palier 126 de support de l'arbre principal 101 du côté de la turbine à gaz 103. On voit que ce palier 126, réalisé à titre d'exemple par un doublet de roulements à billes, est lubrifié et refroidi par un débit recirculé de fluide HP prélevé dans le canal axial 142 à travers un canal de faible longueur 141 et est renvoyé à travers la paroi du fond arrière 153 délimitant le canal de retour 112, par un canal de recirculation 139 de faible longueur vers la zone à moyenne pression située en amont de l'inducteur 113. Une telle disposition évite toute tuyauterie externe, minimise les pertes en ligne et assure des conditions fonctionnelles au débit, surpression, température, optimales pour le palier 126 supportant l'arbre à grande vitesse 101.

On notera que le doublet à roulements à billes 126 représenté sur la figure 1 peut être remplacé par un palier adapté aux grandes vitesses qui soit d'un autre type. Le palier 126 peut ainsi être un palier fluide ou à foils alimenté en fluide haute pression par un canal de recirculation tout à fait analogue au canal 141 de la figure 1.

De façon similaire, le palier 126 peut encore être constitué par un palier magnétique actif refroidi par un faible débit de fluide à haute pression prélevé par le canal de recirculation 141.

Le joint 140 permet dans tous les cas d'assurer une étanchéité par rapport à la zone dans laquelle est située la turbine à gaz 103.

La turbine à gaz 103 peut comprendre un ou plusieurs étages 121, 122 montés directement à l'extrémité de l'arbre principal 101 et fournissant l'ensemble de la puissance nécessaire aux pompes HP et BP.

Le montage des roues de turbine 121 peut être réalisé par un tirant long 123 coaxial à l'arbre principal 101 et une pièce d'appui élastique limitant les dilatations différentielles entre les pièces. La turbine 103 comprend un carter 120 dans lequel sont intégrés un canal 118 d'amenée des gaz chauds et un espace annulaire 119 d'application des gaz chauds sur les aubes des roues de turbine 121. Comme cela a déjà été mentionné, une extrémité 115 du carter 120 de la turbine 103 peut être reliée au carter 102 des pompes HP et BP par une liaison comprenant des pions radiaux 116.

La figure 1 montre en outre des exemples d'étanchéités dynamiques réalisées entre l'arbre secondaire 104 constituant le rotor de la pompe BP et les organes 130, 114 solidaires de l'arbre principal 101 constituant le rotor de la pompe HP. Des joints fluides 147, 148 tels que des labyrinthes à léchettes, des anneaux ou des bagues flottantes sont ainsi disposés entre le rotor 104 et le flasque ou le support 130 du rouet HP 114. Un joint fluide 146 est en outre disposé entre le rotor secondaire 104 et l'extrémité amont du redresseur BP 111,située près du rouet BP 110, avec une ouverture antagoniste de celle des joints fluides 147, 148.

Des moyens d'étanchéité dynamique 144 sont de plus disposés entre le rotor secondaire 104 et l'arbre 101, les moyens d'étanchéité dynamique comprenant de la même façon des joints fluides tels que des labyrinthes à léchettes qui présentent un jeu en fonctionnement minimisant les débits de fluide entre le courant de fluide HP lubrifiant les roulements 127, 128 et le courant de fluide BP d'entrée 107.

Les jeux en fonctionnement des différents joints fluides permettent de régler le débit de fuite vers l'entrée de la pompe BP au strict besoin des paliers basse pression/haute pression et de participer ainsi à une gestion optimale des fuites. Le débit ainsi prélevé pour la lubrification de ces paliers dans le mode préférentiel de réalisation est obtenu sans montage ou pièce supplémentaire.

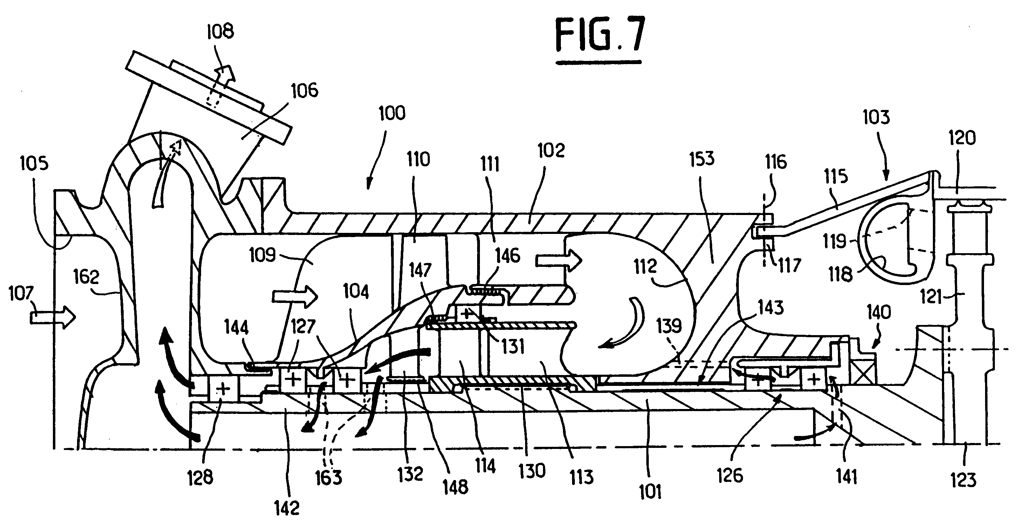

La figure 7 montre une variante de réalisation, dans laquelle l'arbre principal 101 n'est pas prolongé au-delà des canaux des bras radiaux 162. L'extrémité de l'arbre principal 101, et l'extrémité 154 du canal central 142 sont situées dans le plan tangent à la paroi interne des canaux radiaux 162 située du côté des rouets 110, 114. On réduit ainsi les pertes de charge et on supprime les organes de montage de l'un des roulements 128 de la figure 1 situé au-delà des orifices de passage 154. Le roulement 128 subsistant doit dans ce cas être renforcé ou constitué par un doublet de roulements.

## Revendications

1. Turbopompe à gavage intégré en flux axial, pour la pressurisation d'un fluide, comprenant à l'intérieur d'un même carter (102), un arbre principal (101) entraîné par une turbine (103) et portant un rouet haute pression (114), un arbre secondaire (104) coaxial à l'arbre principal (101), au moins un inducteur basse pression (109) monté dans le carter (102) sur l'arbre secondaire (101) au voisinage d'une arrivée (105) de fluide de travail basse pression (107), au moins un rouet de gavage basse pression (110) monté sur l'arbre secondaire (104) en aval de l'inducteur basse pression (109), un redresseur basse pression (111) solidaire du carter (102) et disposé en aval du rouet basse pression (110), un canal de retour (112), et une turbine de gavage (132) solidaire de l'arbre secondaire (104) et du rouet de gavage basse pression (114), caractérisé en ce que le redresseur basse pression (111) est agencé de manière à ramener l'écoulement du fluide moyenne pression créé parallèlement à l'axe de la turbopompe, en ce que le canal de retour (112) est agencé pour dévier de 180° le flux de fluide moyenne pression issu du redresseur (111) et ramener ce flux parallèlement à l'axe de la turbopompe vers le rouet haute pression (114) monté sur l'arbre principal (101) à l'intérieur de l'arbre secondaire (104) de manière à envoyer axialement l'ensemble de l'écoulement haute pression formé par le rouet haute pression (114) vers la turbine de gavage (132) disposée entre l'arbre principal (101) et l'arbre secondaire (104), et en ce que des orifices de passage (163, 154) et un canal axial (142) sont ménagés dans l'arbre principal (101) pour permettre un passage du courant de fluide haute pression sortant de la turbine de gavage (132) à l'intérieur de l'arbre principal (101) puis une évacuation du fluide haute pression vers un canal de refoulement (106) solidaire du carter (102), à travers des bras radiaux (162) situés à l'entrée de la turbopompe, le rouet haute pression (114) constituant une pompe haute pression couplée à une pompe basse pression de gavage constituée par l'inducteur basse pression (109) et le rouet de gavage basse pression (110) et constituant un ensemble unique.

2. Turbopompe selon la revendication 1, caractérisée en ce qu'elle comprend en outre un inducteur haute pression (113) monté sur l'arbre principal (101) entre le canal de retour (112) et le rouet haute pression (114).

3. Turbopompe selon la revendication 1 ou la revendication 2, caractérisée en ce que la pompe basse pression de gavage définit un courant de fluide basse pression essentiellement parallèle à l'axe de la turbopompe tandis que la pompe haute pression est agencée de telle manière que le rouet haute pression (114) refoule le fluide haute pression axialement vers l'intérieur de l'arbre principal (101) puis vers le canal de refoulement (106) dans un plan approximativement perpendiculaire à l'axe de la turbopompe, en croisant, sans échange mécanique, le courant de fluide basse pression à travers lesdits bras radiaux (162)

4. Turbopompe selon la revendication 2, caractérisée en ce que l'arbre principal (101) entraîné à grande vitesse par la turbine (103) est monté par rapport au carter (102) d'une part à l'aide de paliers à roulement (128) disposés entre lesdits bras radiaux (162) et l'extrémité avant de l'arbre principal (101) et d'autre part un palier (126) adapté aux grandes vitesses monté dans le fond arrière du canal de retour (112).

5. Turbopompe selon la revendication 4, caractérisée en ce que l'arbre secondaire (104) est monté sur l'arbre principal (101) par l'intermédiaire d'un roulement à rouleaux (131) et de roulements à billes (127) lubrifiés et refroidis par le courant de fluide de travail.

6. Turbopompe selon la revendication 4 ou la revendication 5, caractérisée en ce que ledit palier (126) monté dans le fond arrière du canal de retour (112) est un palier à billes lubrifié et refroidi par un faible débit de fluide haute pression prélevé dans le canal axial (142) par un canal de recirculation (141) de faible longueur ménagé dans l'arbre principal (101) et renvoyé dans le canal de retour (112) par un canal (139) de faible longueur.

7. Turbopompe selon la revendication 4 ou la revendication 5, caractérisée en ce que ledit palier (126) monté dans le fond arrière du canal de retour (112) est un palier fluide ou à foils alimenté par un faible débit de fluide haute pression prélevé dans le canal axial (142) par un canal de recirculation (141) de faible longueur ménagé dans l'arbre principal (101) et renvoyé dans le canal de retour (112) par un canal (139) de faible longueur.

8. Turbopompe selon la revendication 4 ou la revendication 5, caractérisée en ce que ledit palier (126) monte dans le fond arrière du canal de retour (112) est un palier magnétique actif refroidi par un faible débit de fluide haute pression prélevé dans le canal axial (142) par un canal de recirculation (141) de faible longueur ménagé dans l'arbre principal (101) et renvoyé dans le canal de retour (112) par un canal (139) de faible longueur.

9. Turbopompe selon la revendication 4, caractérisée en ce que les paliers à roulement (128) disposes entre lesdits bras radiaux (162) et l'extrémité avant de l'arbre principal (101) sont lubrifies et refroidis à l'aide du courant de fluide de travail haute pression issu du canal axial (142) et renvoyé vers le canal de refoulement (106).

10. Turbopompe selon l'une quelconque des revendications 1 à 9, caractérisée en ce qu'elle comprend des moyens d'étanchéite dynamique entre l'arbre secondaire (104) constituant le rotor de la pompe basse pression et les organes (130, 114) solidaires de l'arbre principal (101) constituant le rotor de la pompe haute pression qui comprennent des joints fluides (147, 148), tels que des labyrinthes à léchettes, anneaux ou bagues flottantes.

11. Turbopompe selon la revendication 10, caractérisée en ce qu'elle comprend des premier (147,148) et second (146) ensembles de joints successifs, d'ouverture antagoniste, disposés respectivement entre l'arbre secondaire (104) et le rotor de la pompe haute pression, et entre l'arbre secondaire (104) et le redresseur basse pression (111) solidaire du carter (102).

12. Turbopompe selon l'une quelconque des revendications 1 à 11, caractérisée en ce qu'elle comprend des moyens d'étanchéité dynamique (144) entre d'une part les organes solidaires de l'arbre secondaire (104) faisant partie du rotor de la pompe basse pression et d'autre part les bras radiaux (162) et l'arbreprincipal (101), qui comprennent des joints fluides tels que des labyrinthes à léchette qui présentent un jeu en fonctionnement minimisant les débits de fluide entre le courant de fluide haute pression introduit dans le canal axial (142) et évacué par les bras radiaux (162) et le courant de fluide basse pression d'entrée (107).

13. Turbopompe selon la revendication 4 ou la revendication 5, caractérisée en ce que le canal de retour (112) est délimité par une pièce de fonderie (153) intégrée au carter (102) munie de nervures de renforcement (151, 152), et en ce qu'un joint annulaire amortisseur (143) est interpose entre ladite pièce de fonderie (153) et l'arbre principal (101).

14. Turbopompe selon l'une quelconque des revendications 1 à 13, caractérisée en ce que la turbine à gaz (103) d'entraînement de l'arbre principal (101) comprend un carter (120) rattaché par des pions radiaux (116) au carter (102) de la turbopompe.

15. Turbopompe selon l'une quelconque des revendications 1 à 14, caractérisée en ce que les canaux ménages à travers les bras radiaux (162) débouchent dans un tore (161) lui-même en communication avec le canal de refoulement (106).

16. Turbopompe selon l'une quelconque des revendications 1 à 15, caractérisé en ce que l'arbre principal(101) et un orifice (154) de communication entre le canal axial (142) de l'arbre principal (101) et les bras radiaux (162) sont situés dans le plan tangent à la paroi interne des bras radiaux(162) située du côté du rouet basse pression (110) et du rouet haute pression (114).

## Claims

1. An axial flow turbopump with integrated boosting for pressurizing a fluid, comprising within a single casing (102), a main shaft (101) driven by a turbine (103) and carrying a high pressure impeller (114), a secondary shaft (104) coaxial with the main shaft (101), at least one low pressure inducer (109) mounted inside the casing (102) on the secondary shaft (101) in the vicinity of an inlet (105) for low pressure working fluid (107), at least one low pressure boost impeller (110) mounted on the secondary shaft (104) downstream from the low pressure inducer (109), a low pressure baffle (111) secured to the casing (102) and disposed downstream from the low pressure impeller (110), a return channel (112), and a boost turbine (132) rigidly locked with the secondary shaft (104) and the low pressure boost impeller (114), characterized in that the low pressure baffle (111) is so arranged as to restore the medium pressure fluid flow to a direction parallel to the axis of the turbopump, in that the return channel (112) is so arranged as to deflect the medium pressure fluid flow from the baffle (111) through 180° and to return said flow parallel to the axis of the turbopump towards the high pressure impeller (114) mounted on the main shaft (101) inside the secondary shaft (104) in such a manner as to deliver the entire high pressure centrifugal flow formed by the high pressure impeller (114) to the boost turbine (132) located between the main shaft (101) and the secondary shaft (104) and in that through orifices (163, 154) and an axial channel (142) are formed in the main shaft (101) to pass a flow of high pressure fluid leaving the boost turbine (132) inside the main shaft (101) and then to exhaust the high pressure fluid towards a delivery channel (106) secured to the casing (102) via radial arms (162) situated at the inlet of the turbopressure, the high pressure impeller (114) constituting a high pressure pump coupled to a low pressure boost pump constituted by the low pressure inducer (109) and the low pressure impeller (110) and constituting a unitary assembly.

2. Turbopump according to claim 1, characterized in that it further includes a high pressure inducer (113) mounted on the main shaft (101) between the return channel (112) and the high pressure impeller (114).

3. Turbopump according to claim 1 or claim 2, characterized in that the low pressure boost pump defines a medium pressure fluid flow which is essentially parallel to the axis of the turbopump, while the high pressure pump is arranged in such a manner that the high pressure impeller (114) delivers the high pressure fluid axially towards the inside of the main shaft (101) and then towards the delivery channel (106) in a plane approximately perpendicular to the axis of the turbopump, passing through the flow of low pressure fluid via said radial arms (162) without mechanical exchange.

4. Turbopump according to claim 2, characterized in that the main shaft (101) driven at high speed by the turbine (103) is mounted relative to the casing (102) firstly by means of rolling bearings (128) disposed between said radial arms (162) and the front end of the main shaft (101), and secondly by a bearing (126) adapted to high speeds and mounted in the back plate of the return channel (112).

5. Turbopump according to claim 4, characterized in that the secondary shaft (104) is mounted on the main shaft (101) via a roller bearing (131) and ball bearings (127) lubricated and cooled by the flow of working fluid.

6. Turbopump according to claim 4 or claim 5, characterized in that said bearing (126) mounted in the backplate of the return channel (112) is a ball bearing that is lubricated and cooled by a low flow rate of high pressure fluid taken from the axial channel (142) via a short recirculation channel (141) formed in the main shaft (101) and returned to the return channel (112) via a short channel (139).

7. Turbopump according to claim 4 or claim 5, characterized in that said bearing (126) mounted in the backplate of the return channel (112) is a fluid bearing or a foil bearing fed with a small flow rate of high pressure fluid taken from the axial channel (142) via a short recirculation channel (141) formed in the main shaft (101) and returned to the return channel (112) via a short channel (139).

8. Turbopump according to claim 4 or claim 5, characterized in that said bearing (126) mounted in the backplate of the return channel (112) is an active magnetic bearing cooled by a low flow rate of high pressure fluid taken from the axial channel (142) via a short recirculation channel formed in the main shaft (101) and returned to the return channel (112) via a short channel (139).

9. Turbopump according to claim 4, characterized in that the rolling bearings (128) disposed between said radial arms (162) and the front end of the main shaft (101) are lubricated and cooled by means of the flow of high pressure working fluid from the axial channel (142) and returned towards the delivery channel (106).

10. Turbopump according to anyone of claims 1 to 9, characterized in that it comprises dynamic sealing means between the secondary shaft (104) constituting the rotor of the low pressure pump and the members (130, 114) secured to the main shaft (101) constituting the rotor of the high pressure pump, which means comprise fluid seals (147, 148) such as wiper labyrinths, rings, or floating rings.

11. Turbopump according to claim 10, characterized in that it comprises first (147, 148) and second (146) successive sets of oppositely directed seals disposed respectively between the secondary shaft (104) and the rotor of the high pressure pump, and between the secondary shaft (104) and the low pressure baffle (111) secured to the casing (102).

12. Turbopump according to anyone of claims 1 to 11, characterized in that it comprises dynamic sealing means (144) between firstly the members secured to the secondary shaft (104) forming a portion of the rotor of the low pressure pump and secondly the radial arms (162) and the main shaft (101) which comprise fluid seals such as wiper labyrinths having operating clearance that minimizes fluid flows between the high pressure fluid flow injected into the axial channel (142) and exhausted via the radial arms (162) and the inlet low pressure fluid flow (107).

13. Turbopump according to claim 4 or claim 5, characterized in that the return channel (112) is delimited by a casting (153) integrated in the casing (102) and provided with reinforcing ribs (151, 152) and in that a shock absorbing annular gasket (143) is interposed between said casting (153) and the main shaft (101).

14. Turbopump according to anyone of claims 1 to 13, characterized in that the gas turbine (103) driving the main shaft (101) includes a casing (120) connected via radial studs (116) to the casing (102) of the turbopump.

15. Turbopump according to anyone of claims 1 to 14, characterized in that the channels formed through the radial arms (162) open out into a torus (161) which is itself in communication with the delivery channel (106).

16. Turbopump according to anyone of claims 1 to 15, characterized in that the main shaft (101) and a communication orifice (154) between the axial channel (142) of the main shaft (101) and the radial arms (162) are situated in a plane tangential to the inside walls of the radial arms (162) situated adjacent to the low pressure impeller (110) and to the high pressure impeller (114).

## Patentansprüche

1. Turbopumpe mit integrierter axialer Durchströmungsaufladung, für das Unterdrucksetzen eines Fluids, mit, im Inneren eines selben Gehäuses (102), einer Hauptwelle (101), die von einer Turbine (103) angetrieben wird, und ein Hochdruckflügelrad (114) trägt, einer zweiten Welle (104), die koaxial zur Hauptwelle (101) verläuft, wenigstens einem Niederdruckinduktor (109), der in dem Gehäuse (102) auf der zweiten Welle (101) in der Nähe eines Arbeitsfluideintritts (105) von Niederdruck (107) angebracht ist, wenigstens einem Niederdruckaufladeflügelrad (110), das auf der zweiten Welle (104) angebracht ist, stromab des Niederdruckinduktors (109), einem Niederdruckleitapparat (111), der mit dem Gehäuse (102) verbunden ist und stromab des Niederdruckflügelrades (110) angeordnet ist, einem Rücklaufkanal (112), und einer Aufladeturbine (132), die mit der zweiten Welle (104) und dem Niederdruckaufladeflügelrad (114) verbunden ist, dadurch gekennzeichnet, daß der Niederdruckleitapparat (111) derart angeordnet ist, daß er den Mitteldruckfluidstrom, der parallel zur Achse der Turbopumpe erzeugt wird, zurückbringt, daß der Rücklaufkanal (112) so angeordnet ist, daß er den Fluß des Mitteldruckfluids um 180° umlenkt, der von dem Leitapparat (111) ausgeht, und diesen Fluß parallel zur Achse der Turbopumpe zum Hochdruckflügelrad (114) zurückbringt, das auf der Hauptwelle (101) im Inneren der zweiten Welle (104) derart montiert ist, daß es den gesamten Hochdruckstromfluß, der von dem Hochdruckflügelrad (114) gebildet wird, axial zur Aufladeturbine (132) zurückschickt, die zwischen der Hauptwelle (101) und der zweiten Welle (104) angeordnet ist, und daß die Durchtrittsöffnungen (163, 154) und ein axialer Kanal (142) in der Hauptwelle (101) ausgebildet sind, um einen Durchtritt des Hochdruckfluidstromes, der aus der Aufladeturbine (132) austritt, im Inneren der Hauptwelle (101) zu ermöglichen, sodann ein Evakuieren des Hochdruckfluids zu einem Rückführkanal (106) ermöglicht, der mit dem Gehäuse (102) verbunden ist, quer durch radiale Arme (162) hindurch, die am Eintritt der Turbopumpe angeordnet sind, wobei das Hochdruckflügelrad (114) eine Hochdruckpumpe bildet, die mit einer Niederdruckaufladepumpe gekoppelt ist, die von dem Niederdruckinduktor (109) und dem Niederdruckaufladeflügelrad (110) gebildet wird und eine einzige Einheit bildet.

2. Turbopumpe nach Anspruch 1, dadurch gekennzeichnet, daß sie darüberhinaus einen Hochdruckinduktor (113) aufweist, der auf der Hauptwelle (101) zwischen dem Rücklaufkanal (112) und dem Hochdruckflügelrad (114) angeordnet ist.

3. Turbopumpe nach Anspruch 1 oder 2 , dadurch gekennzeichnet, daß die Niederdruckaufladepumpe einen Niederdruckfluidstrom definiert, der im wesentlichen parallel zur Achse der Turbopumpe verläuft, während die Hochdruckpumpe derart ausgebildet ist, daß das Hochdruckflügelrad (114) das Hochdruckfluid axial zum Inneren der Hauptwelle, sodann zu einem Rücklaufkanal (106) in einer Ebene im wesentlichen senkrecht zur Achse der Turbopumpe zurückwirft, unter Kreuzen ohne mechanischen Austausch des Niederdruckfluidstromes durch die genannten radialen Arme (162).

4. Turbopumpe nach Anspruch 2, dadurch gekennzeichnet, daß die Hauptwelle (101), die durch die Turbine (103) auf eine hohe Geschwindigkeit angetrieben wird, bzgl. des Gehäuses (102) einerseits mit Hilfe von Rollenlagern (128), die zwischen den genannten Armen (162) und dem vorderen Ende der Hauptwelle (101) angeordnet sind, und andererseits mit Hilfe eines Lagers (126) angeordnet ist, das großen Geschwindikeiten angepaßt ist, und in dem hinteren Boden des Rückführkanals (112) angebracht ist.

5. Turbopumpe nach Anspruch 4, dadurch gekennzeichnet, daß die zweite Welle (104) auf die Hauptwelle (101) mittels eines Rollenlagers (131) und Kugellagern (127) angebracht ist, die durch den Arbeitsfluidstrom geschmiert und gekühlt werden.

6. Turbopumpe nach Anspruch 4 oder 5, dadurch gekennzeichnet, daß das Lager (126), das im hinteren Boden des Rücklaufkanals (112) angebracht ist, ein Kugellager ist, das geschmiert und gekühlt wird durch eine schwache Hochdruckfluidrate, die in dem axialen Kanal (142) durch einen Rückspeisekanal (141) von geringer Länge abgegriffen wird, der in der Hauptwelle (101) ausgebildet ist und in den Rücklaufkanal (112) durch einen Kanal (139) von geringer Länge zurückgeführt wird.

7. Turbopumpe nach Anspruch 4 oder 5, dadurch gekennzeichnet, daß das in dem hinteren Boden des Rücklaufkanals (112) angeordnete Lager ein Fluid- oder ein Folienlager ist, das durch eine schwache Hochdruckfluidrate gespeist wird, die in dem axialen Kanal (142) durch einen Rückspeisekanal (141) von schwacher Länge herausgegriffen wird, der in der Hauptwelle (101) ausgebildet ist, und in den Rücklaufkanal (112) durch einen Kanal (139) von geringer Länge zurückgeführt wird.

8. Turbopumpe nach Anspruch 4 oder 5, dadurch gekennzeichnet, daß das genannte Lager (126), das im hinteren Boden des Rücklaufkanals (112) angebracht ist, ein aktives magnetisches Lager ist, das von einer schwachen Hochdruckfluidrate gekühlt wird, die im axialen Kanal (142) durch einen Rückspeisekanal (141) von geringer Länge abgegriffen wird, der in der Hauptwelle (101) ausgebildet ist und durch einen Kanal (139) von geringer Länge in den Rücklaufkanal (112) zurückgeschickt wird.

9. Turbopumpe nach Anspruch 4, dadurch gekennzeichnet, daß die Rollenlager (128), die zwischen den radialen Armen (162) und dem vorderen Ende der Hauptwelle (101) angeordnet sind, geschmiert und mit Hilfe eines Arbeitsfluidstromes von hohem Druck gekühlt werden, der von dem axialen Kanal (142) stammt und zum Rückführkanal (106) zurückgeschickt wird.

10. Turbopumpe nach einem der Ansprüche 1 bis 9, dadurch gekennzeichnet, daß sie dynamische Dichtungseinrichtungen zwischen der zweiten Welle (104), die den Rotor der Niederdruckpumpe bildet, und den Organen (130, 114) aufweist, die mit deer Hauptwelle (101) verbunden sind, die den Rotor der Hochdruckpumpe bildet, welche Fluiddichtungen (147, 148) aufweisen, wie beispielsweise Scheibchen-Labyrinthe, Reifen oder schwimmende Ringe aufweist.

11. Turbopumpe nach Anspruch 10, dadurch gekennzeichnet, daß sie eine erste Anordnung (147, 148), eine zweite Anordnung (146) von aufeinanderfolgenden Dichtungen von gegenwirkender Öffnung aufweist, die zwischen der zweiten Welle (104) und dem Rotor der Hochdruckpumpe, bzw. zwischen der zweiten Welle (104) und dem Niederdruckleitapparat (111), der mit dem Gehäuse (102) verbunden ist, angeordnet sind.

12. Turbopumpe nach einem der Ansprüche 1 bis 11, dadurch gekennzeichnet, daß sie dynamische Dichtungseinrichtungen (144) einerseits zwischen den mit der zweiten Welle (104) verbundenen Organen, die Teil des Rotors der Niederdruckpumpe sind, und andererseits den radialen Armen (162) und der Hauptwelle (101) aufweist, welche Fluiddichtungen aufweisen, wie beispielsweise Scheibchen-Labyrinte, die ein Spiel im Betrieb aufweisen, wodurch die Fluidraten zwischen dem Hochdruckfluidstrom, der in den axialen Kanal (142) eingeführt wird und durch die radialen Arme (162) ausgebracht wird, und dem Niederdruckfluid des Eingangs (107) minimieren.

13. Turbopumpe nach Anspruch 4 oder 5, dadurch gekennzeichnet, daß der Rücklaufkanal (112) durch ein im Gehäuse (102) integriertes Gußteil (153) begrenzt wird, das mit Verstärkungsrippen (151, 152) versehen ist, und daß eine ringförmige Dämpfungsdichtung (143) zwischen dem Gußteil (153) und der Hauptwelle (101) gesetzt ist.

14. Turbopumpe nach einem der Ansprüche 1 bis 13, dadurch gekennzeichnet, daß die Antriebsgasturbine (103) der Hauptwelle (101) ein Gehäuse (120) aufweist, das mit radialen Zapfen (116) mit dem Gehäuse (102) der Turbopumpe verbunden ist.

15. Turbopumpe nach einem der Ansprüche 1 bis 14, dadurch gekennzeichnet, daß die durch die radialen Arme (162) ausgebildeten Kanäle in einem Torus (161) münden, der selbst mit dem Rückführkanal (106) in Verbindung steht.

16. Turbopumpe nach einem der Ansprüche 1 bis 15, dadurch gekennzeichnet, daß die Hauptwelle (101) und eine Verbindungsöffnung (154) zwischen dem axialen Kanal (142) der Hauptwelle (101) und den radialen Armen (162) in der Ebene angeordnet sind, die die Innenwand der radialen Armen (162) tangiert, welche auf der Seite des Niederdruckflügelrads (110) und des Hochdruckflügelrads (114) angeordnet ist.
